# EUROPÄISCHE PATENTSCHRIFT

(11) **EP 2 464 479 B1**
(45) Veröffentlichungstag und Bekanntmachung des Hinweises auf die Patenterteilung: **30.10.2019**
(21) Anmeldenummer: 10743038.1
(22) Anmeldetag: 11.08.2010
(51) Int. Cl.: B23C 5/10, B23C 5/20, B23C 5/22, B23G 5/18

(54) **FRÄSWERKZEUG, INSBESONDERE GEWINDEFRÄSWERKZEUG**
MILLING TOOL, IN PARTICULAR A THREAD MILLING TOOL
OUTIL DE FRAISAGE, EN PARTICULIER OUTIL DE FRAISAGE À FILETER

(30) Priorität: 13.08.2009 DE 102009038133
(43) Veröffentlichungstag der Anmeldung: 20.06.2012
(73) Patentinhaber: Komet Group GmbH, 70565 Stuttgart (DE)
(72) Erfinder: EDELMANN, Karl-Heinz, 71139 Ehingen (DE)
(74) Vertreter: Kohl, Karl-Heinz
(86) Internationale Anmeldenummer: PCT/EP2010/004889
(87) Internationale Veröffentlichungsnummer: WO 2011/018210

(56) Entgegenhaltungen:
- EP-A1- 1 410 864
- WO-A1-01/00362
- CH-A- 199 842
- DE-A1- 19 958 636
- DE-A1-102005 010 145
- JP-A- 7 164 213
- US-A- 1 586 186
- US-A- 1 704 741
- US-A- 2 152 567
- US-A- 5 088 861

## Beschreibung

Die Erfindung betrifft ein Fräswerkzeug, insbesondere ein Gewindefräswerkzeug, nach dem Oberbegriff des Anspruches 1.

Es sind Fräswerkzeuge bekannt, deren Arbeitsteil mit Aufnahmen für die Schneideinsätze versehen sind. Die Aufnahmen sind radial offen, so dass die Schneideinsätze quer zur Längsrichtung der Aufnahmen eingesetzt werden können. In den Aufnahmen werden die Schneideinsätze durch Befestigungsschrauben gesichert, die den Schneideinsatz in der Aufnahme verklemmen und an den zueinander parallelen Außenseiten des Schneideinsatzes angreifen. Die Schneideinsätze lassen sich auf diese Weise nur mit ungenügender Spannung im Arbeitsteil befestigen.

Es sind auch Gewindefräswerkzeuge bekannt, bei denen die Schneideinsätze an einander gegenüberliegenden Längsseiten mit Einkerbungen versehen sind, in welche Spannschrauben eingreifen, die mit einer ebenen Stirnseite am Boden der Einkerbung anliegen und auf diese Weise den Schneideinsatz in der Aufnahme halten. Die Herstellung solcher Schneideinsätze ist aufwändig und teuer.

Bei dem bekannten Fräswerkzeug (DE 199 58 636 A1) sind die Schneideinsätze mit Bohrungen versehen, die Schrauben aufnehmen, mit denen der Schneideinsatz in der Aufnahme exzentrisch gespannt wird, indem Bohrungen in der Auflagefläche der Aufnahme versetzt zu den Bohrungen des Schneideinsatzes liegen.

Bei einem anderen bekannten Fräswerkzeug (JP 7 164213 A) ist der Schneideinsatz ebenfalls von einer Bohrung durchsetzt, durch die eine Spannschraube ragt, mit der der Schneideinsatz im Fräswerkzeug befestigt wird.

Ein Fräswerkzeug gemäß dem Oberbegriff des Anspruchs 1 ist aus US 2 152 567 bekannt.

Der Erfindung liegt die Aufgabe zugrunde, das gattungsgemäße Fräswerkzeug so auszubilden, dass es bei einfacher Fertigung und Montage eine sichere und zuverlässige Befestigung und Positionierung der Schneideinsätze am Arbeitsteil des Fräswerkzeuges ermöglicht.

Diese Aufgabe wird beim gattungsgemäßen Fräswerkzeug erfindungsgemäß mit den kennzeichnenden Merkmalen des Anspruches 1 gelöst.

Beim erfindungsgemäßen Schneideinsatz sind die Befestigungselemente als Spannelemente ausgebildet, mit denen der Schneideinsatz in der Aufnahme verspannt wird. Zum Verspannen der Schneideinsätze in den Aufnahmen reicht grundsätzlich ein Spannelement aus. Je nach Länge der Schneideinsätze können aber auch zwei oder mehr Spannelemente pro Schneideinsatz eingesetzt werden. Das Spannelement greift an einer schrägen Spannfläche des Schneideinsatzes an, der auf der gegenüberliegenden Seite mit einer weiteren Schrägfläche versehen ist. Unter der Kraft des Spannelementes wird diese Schrägfläche des Schneideinsatzes gegen die Schrägfläche der Aufnahme verspannt. Der Schneideinsatz wird aufgrund der an seinen einander gegenüberliegenden Seiten befindlichen Schrägflächen zuverlässig in der Aufnahme verspannt und gehalten. Aufgrund der Schrägflächen erfolgt mit dem Verspannen gleichzeitig auch eine Positionierung des Schneideinsatzes in der Einbaulage. Die Schrägfläche und die Spannfläche verlaufen in Bezug auf den Arbeitsteil des Fräswerkzeuges nach innen bzw. nach außen in Richtung auf die Fräszähne des Schneideinsatzes konvergierend. Die Schrägfläche der Aufnahme schließt unter einem spitzen Winkel an den Boden der Aufnahme an, die zur Stirnseite des Arbeitsteiles offen ist. Das Spannelement liegt in Umfangsrichtung des Arbeitsteiles neben dem Schneideinsatz.

Vorteilhaft ist das Spannelement so ausgebildet, dass es linienförmig an der Spannfläche des Schneideinsatzes anliegt. Die entsprechende Spannfläche des Schneideinsatzes muss darum nicht mit hoher Genauigkeit gefertigt werden.

Um in einfacher Weise die linienförmige Anlage des Spannelementes an der Spannfläche des Schneideinsatzes zu erreichen, ist das Spannelement vorteilhaft durch eine Spannschraube mit einem konischen Spannkopf gebildet, der unter Linienberührung an der Spannfläche des Schneideinsatzes anliegt.

Das Spannelement kann aber auch so gestaltet sein, dass es flächig an der Spannfläche des Schneideinsatzes anliegt.

Bei einer vorteilhaften Ausbildung ist das Spannelement über wenigstens einen Biegeabschnitt mit dem Arbeitsteil des erfindungsgemäßen Fräswerkzeuges verbunden. Zum Verspannen wird das Spannelement gegen die Spannfläche des Schneideinsatzes gedrückt, wobei es infolge des Biegeabschnittes gegenüber dem Arbeitsteil entsprechend gebogen wird.

Vorteilhaft ist der Biegeabschnitt einstückig mit dem Arbeitsteil ausgebildet, so dass bei der Montage die Spannelemente nicht gesondert am Arbeitsteil montiert werden müssen. Dadurch lässt sich der Schneideinsatz sehr einfach und schnell am Arbeitsteil verspannen.

Der Biegeabschnitt wird vorteilhaft durch Drahterodierschnitte im Arbeitsteil gebildet. Der Arbeitsteil kann somit zunächst aus Vollmaterial hergestellt werden, in dem durch die Drahterodierschnitte die Biegeabschnitte mit hoher Präzision hergestellt werden können. Mit den Drahterodierschnitten lassen sich sehr dünne Biegestege herstellen, die beim Verspannen der Schneideinsätze in den Aufnahmen zuverlässig gebogen werden können. Um die Spannelemente gegen die in den Aufnahmen befindlichen Schneideinsätze zu bewegen, werden vorteilhaft Schrauben eingesetzt, mit denen die Spannelemente betätigt werden.

Die Spannelemente können auch vom Arbeitsteil getrennte Bauteile sein, die mittels wenigstens einer Schraube betätigt werden.

Diese Spannelemente befinden sich in einer Aufnahme in der Wandung des Arbeitsteiles. Dort lassen sich die Spannelemente einfach anordnen und mit Hilfe der Schrauben montieren.

Die Aufnahmen für die Schneideinsätze können an der Innen- und/oder an der Außenseite der Wandung des Arbeitsteils vorgesehen sein.

Vorteilhaft konvergieren die Schrägflächen der Aufnahmen und die Spannflächen der Schneideinsätze, in Achsrichtung des Fräswerkzeuges gesehen. Dadurch ist in einfacher Weise gewährleistet, dass die Schneideinsätze, nachdem sie in die Aufnahmen eingesetzt, aber noch nicht gespannt sind, nicht aus den Aufnahmen herausfallen können. Dadurch wird die Verspannung der Schneideinsätze in den Aufnahmen wesentlich erleichtert.

Infolge der Schrägflächen werden die Schneideinsätze durch die Spannelemente in vorteilhafter Weise axial und radial in den Aufnahmen positioniert und ausgerichtet, so dass ein guter Rundlauf an den Schneiden der Schneideinsätze gewährleistet ist.

Das Fräswerkzeug kann ein Glockenfräser oder ein Schaftfräser sein. Sind die Fräswerkzeuge Gewindefräswerkzeuge, dann kann mit dem Glockenfräser ein Außengewinde und mit dem Schaftfräser ein Innengewinde hergestellt werden.

Damit eine gute Späneabfuhr gewährleistet ist, ist der Arbeitsteil vorteilhaft mit seine Wandung durchsetzenden Öffnungen versehen. Eine solche Ausbildung ist bevorzugt bei Fräswerkzeugen vorgesehen, die unter Minimalmengenschmierungsbedingungen oder gar bei der Trockenbearbeitung eingesetzt werden.

Die Schlitze können zur Stirnseite des Arbeitsteiles hin randoffen ausgebildet sein, wodurch die Wirkung noch verbessert wird.

Werden die Fräswerkzeuge bei schwingungs/vibrationsanfälligen Bearbeitungsprozessen eingesetzt, dann sind die Schlitze vorteilhaft mit schwingungsabsorbierendem Material ausgefüllt.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: in Vorderansicht einen erfindungsgemäßen Fräser in Form eines Glockenfräsers,
- Fig. 2: einen Axialschnitt durch den Fräser gemäß Fig. 1,
- Fig. 3: den Fräser gemäß Fig. 1 in perspektivischer Darstellung,
- Fig. 4: eine Draufsicht auf den Fräser gemäß Fig. 1,
- Fig. 5 bis Fig. 8: jeweils in perspektivischer Darstellung weitere Ausführungsformen von erfindungsgemäßen Fräsern,
- Fig. 9: in Vorderansicht eine weitere Ausführungsform eines erfindungsgemäßen, als Glockenfräser ausgebildeten Fräsers,
- Fig. 10: einen Axialschnitt durch den Fräser gemäß Fig. 9,
- Fig. 11: einen Längsschnitt durch den Fräser gemäß Fig. 9,
- Fig. 12: in perspektivischer Darstellung den Fräser gemäß Fig. 9,
- Fig. 13: eine Draufsicht auf den Fräser gemäß Fig. 9,
- Fig. 14: einen Radialschnitt längs der Linie L-L in Fig. 9,
- Fig. 15: in Seitenansicht die Klemmung eines Schneideinsatzes mittels eines Spannelementes in Form einer Spannschraube,
- Fig. 16: die Anordnung gemäß Fig. 15 in Draufsicht,
- Fig. 17: einen Schneideinsatz für den erfindungsgemäßen Fräser in perspektivischer Darstellung,
- Fig. 18: den Schneideinsatz gemäß Fig. 17 in Draufsicht,
- Fig. 19: den Schneideinsatz gemäß Fig. 17 in Vorderansicht,
- Fig. 20: den Schneideinsatz gemäß Fig. 17 in Seitenansicht,
- Fig. 21: eine weitere Ausführungsform eines Schneideinsatzes für den erfindungsgemäßen Fräser in perspektivischer Darstellung,
- Fig. 22: den Schneideinsatz gemäß Fig. 21 in Vorderansicht,
- Fig. 23: teilweise in Ansicht und teilweise im Axialschnitt eine weitere Ausführungsform eines erfindungsgemäßen, als Schaftfräser ausgebildeten Fräsers,
- Fig. 24: den Fräser gemäß Fig. 23 in perspektivischer Darstellung,
- Fig. 25: eine Draufsicht auf den Fräser gemäß Fig. 23,
- Fig. 26: einen Radialschnitt durch den Arbeitsteil des Fräsers gemäß Fig. 23,
- Fig. 27: in Vorderansicht eine weitere Ausführungsform eines als Glockenfräser ausgebildeten erfindungsgemäßen Fräsers,
- Fig. 28: den Fräser gemäß Fig. 27 im Axialschnitt,
- Fig. 29: den erfindungsgemäßen Fräser gemäß Fig. 27 in perspektivischer Darstellung,
- Fig. 30: eine Draufsicht auf den Fräser gemäß Fig. 27,
- Fig. 31: einen Radialschnitt durch den Arbeitsteil des Fräsers gemäß Fig. 27,
- Fig. 32: eine weitere Ausführungsform eines erfindungsgemäßen Fräsers in Vorderansicht,
- Fig. 33: den Fräser gemäß Fig. 32 in perspektivischer Darstellung,
- Fig. 34: den Fräser gemäß Fig. 32 in einer anderen perspektivischen Darstellung,
- Fig. 35: eine Draufsicht auf den Fräser gemäß Fig. 32,
- Fig. 36: einen Radialschnitt durch den Fräser gemäß Fig. 32,
- Fig. 37: in Vorderansicht eine weitere Ausführungsform eines erfindungsgemäßen, als Glockenfräser ausgebildeten erfindungsgemäßen Fräsers,
- Fig. 38: den Fräser gemäß Fig. 37 im Längsschnitt,
- Fig. 39: den Fräser gemäß Fig. 37 in perspektivischer Darstellung,
- Fig. 40: eine Draufsicht auf den Fräser gemäß Fig. 37,
- Fig. 41: einen Radialschnitt durch den Fräserkopf des Fräsers gemäß Fig. 37,
- Fig. 42: eine Vorderansicht eines Spannelementes des Fräsers gemäß Fig. 37,
- Fig. 43: eine Draufsicht auf das Spannelement gemäß Fig. 42,
- Fig. 44: das Spannelement gemäß Fig. 42 in perspektivischer Darstellung,
- Fig. 45: das Spannelement gemäß Fig. 42 in Seitenansicht,
- Fig. 46: einen Teil des Spannelementes gemäß Fig. 42 im Schnitt,
- Fig. 47: in Vorderansicht eine weitere Ausführungsform eines erfindungsgemäßen Fräsers in Form eines Gewindefräsers,
- Fig. 48: den Fräser gemäß Fig. 47 in perspektivischer Darstellung,
- Fig. 49: den Fräser gemäß Fig. 47 in einer anderen perspektivischen Darstellung,
- Fig. 50: eine Draufsicht auf den Fräser gemäß Fig. 47,
- Fig. 51: einen Radialschnitt längs der Linie LI-LI in Fig. 47.

Die im Folgenden beschriebenen Fräser sind vorteilhaft Gewindefräser. Es sind aber auch andere Schneidenformen möglich. Die Werkzeuge können so ausgebildet sein, dass mit ihnen nur Außenkonturen hergestellt werden können. In diesen Fällen sind die Schneideinsätze in einem stirnseitigen Hohlraum untergebracht und vom Grundkörper umschlossen. Solche Fräser werden als Glockenfräser bezeichnet.

Die Schneideinsätze können auch radial am Umfang des Grundkörpers angeordnet sein. In diesen Fällen kann das Werkzeug ähnlich einem Schaftfräser Innen- und/oder Außenkonturen bearbeiten. Für größere Schnittlängen ist es auch möglich, mehrere axial versetzt hintereinander angeordnete Schneideinsätze zu verwenden.

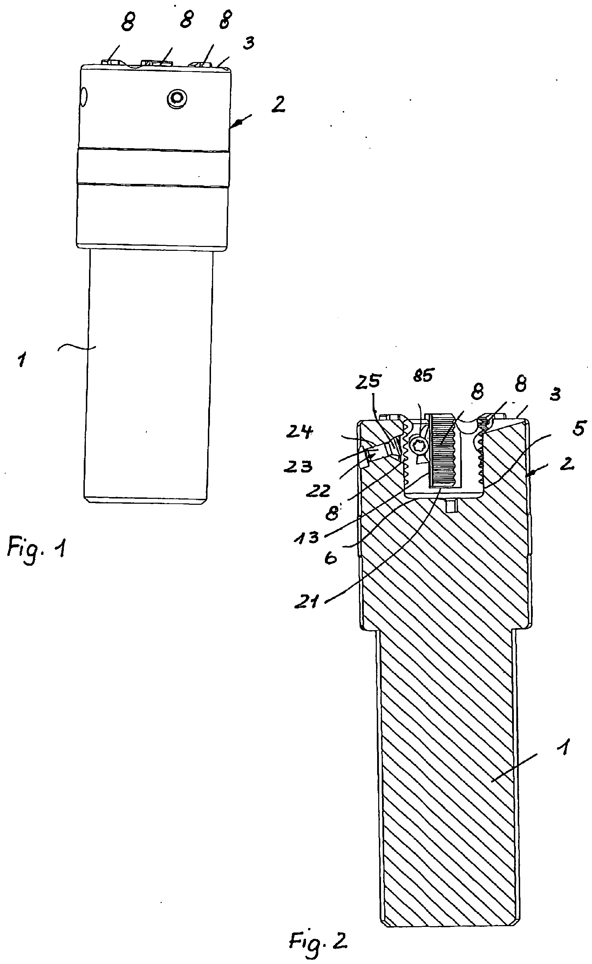

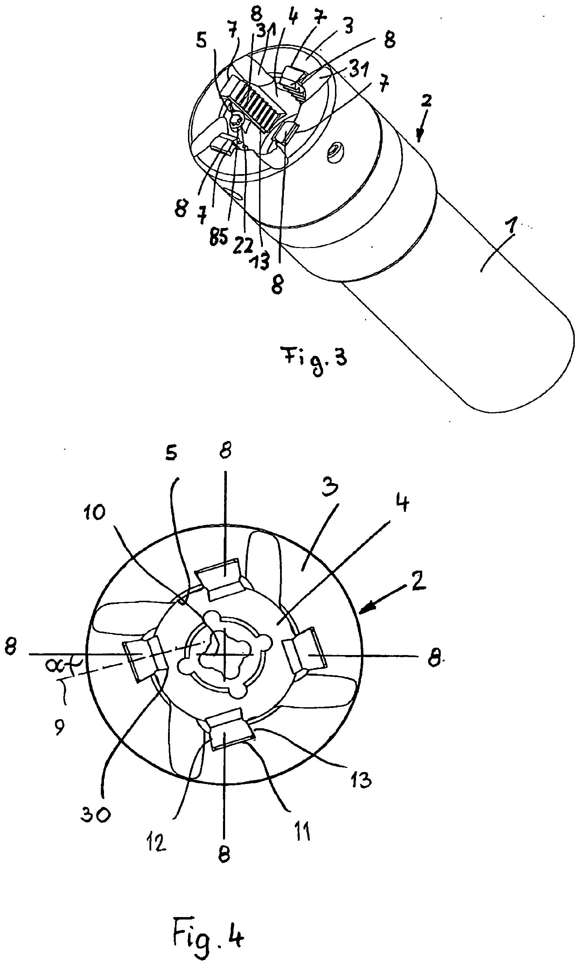

Der Fräser gemäß den Fig. 1 bis 4 ist ein Glockenfräser und hat einen zylindrischen Schaft 1, mit dem der Fräser in einer Werkzeugaufnahme aufgenommen werden kann. Am Schaftende befindet sich ein den Arbeitsteil des Fräsers bildender Grundkörper 2, der einstückig mit dem Schaft 1 ausgebildet sein kann. Es ist aber auch möglich, den Grundkörper 2 am Schaft 1 zu befestigen, beispielsweise anzulöten. In die Stirnseite 3 des Grundkörpers 2 mündet eine zentrale Vertiefung 4, die von einer Wandung 5 sowie einem Boden 6 begrenzt wird. In der Wandung 5 befinden sich axial verlaufende nutförmige Aufnahmen 7, die zur Stirnseite 3 offen sind. In die Aufnahmen 7 sind Schneideinsätze 8 eingesetzt, mit denen an Werkstücken Außengewinde hergestellt werden. Wie Fig. 4 zeigt, sind die Aufnahmen 7 in Winkelabständen von 90° zueinander angeordnet. Die Aufnahmen 7 sind gleich ausgebildet und so in der Wandung 5 vorgesehen, dass die Längsmittelebenen 9 der Aufnahmen 7 einen spitzen Winkel α mit der jeweiligen Radialen 10 des Grundkörpers 2 einschließen. Die Aufnahmen 7 können auch in anderen Winkelabständen angeordnet und/oder ungleichmäßig über den Umfang der Wandung 5 verteilt vorgesehen sein.

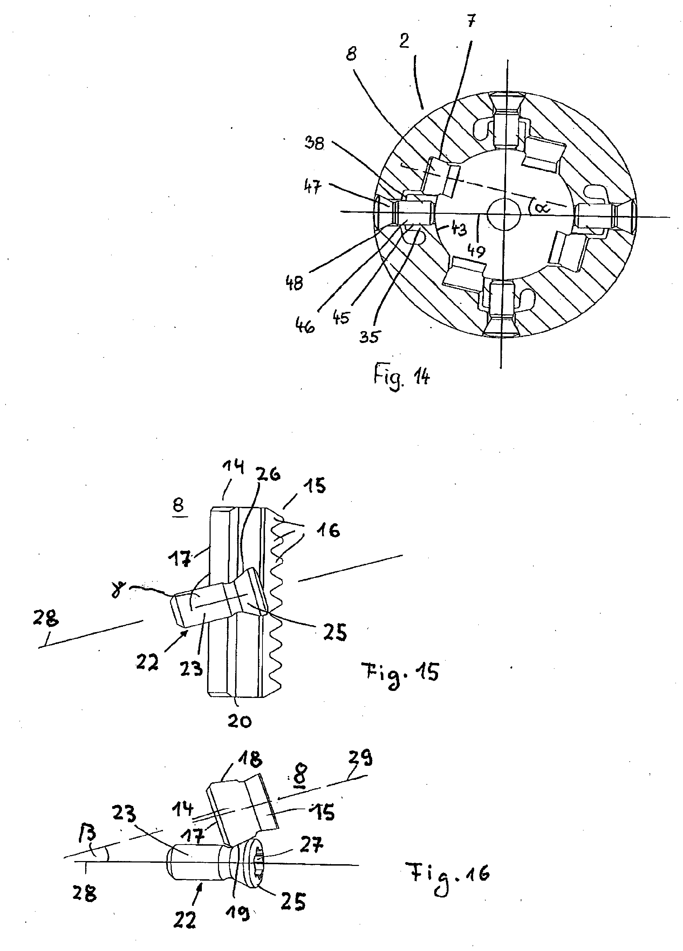

Jede Aufnahme 7 hat einen Boden 11 und vom Boden 11 aus konvergierend verlaufende Seitenwände 12, 13. Die Schneideinsätze 8 haben, wie die Fig. 15 und 16 zeigen, einen Klemmteil 14 und einen Zahnteil 15, der mit Gewindefräszähnen 16 versehen ist. Der Zahnteil 15 des Schneideinsatzes 8 ragt aus der Aufnahme 7 in die Vertiefung 4. Die Schneideinsätze 8 liegen mit ihren Klemmteilen 14 in den Aufnahmen 7.

Die Klemmteile 14 haben einen ebenen Boden 17, mit dem sie am Boden 11 der Aufnahmen 7 anliegen. Die Klemmteile 14 sind außerdem mit Seitenwänden 18, 19 versehen, die in Richtung auf den Zahnteil 15 konvergieren (Fig. 16).

Aufgrund der konvergierenden Seitenwände 12, 13 der Aufnahmen 7 und der konvergierenden Seitenwände 18, 19 der Klemmteile 14 wird der Vorteil erreicht, dass die Schneideinsätze 8 nach dem Einsetzen in die Aufnahmen 7 nicht radial nach innen in die Vertiefung 4 fallen können, wenn die Schneideinsätze noch nicht gespannt sind. Die Schneideinsätze 8 lassen sich von der Stirnseite 3 des Grundkörpers 2 aus einfach in die Aufnahmen 7 schieben, bis sie mit ihrer Unterseite 20 auf der Unterseite 21 (Fig. 2) der Aufnahmen 7 aufsitzen.

Zum Verspannen der Schneideinsätze 8 in den Aufnahmen 7 dienen Spannelemente 22, die als Spannschrauben ausgebildet sind. Sie haben einen Gewindeteil 23, mit dem die Spannelemente 22 in Gewindebohrungen 24 (Fig. 2) im Grundkörper 2 eingreifen. Die Spannelemente 22 sind außerdem mit einem Spannkopf 25 versehen, der einen konischen Mantel 26 aufweist. Der Mantel 26 hat einen in Richtung auf das freie Ende des Spannkopfes 25 sich öffnenden Kegelwinkel. Die Stirnseite des Spannkopfes 25 ist mit einer Formschlussausnehmung 27 versehen, in die ein Werkzeug zum Drehen des Spannelementes 22 eingesetzt werden kann.

Das Spannelement 22 ist so in Bezug auf den Klemmteil 14 des Schneideinsatzes 8 angeordnet, dass der Mantel 26 des Spannkopfes 25 unter Linienberührung an der Seitenwand 19 des Klemmteils 14 anliegt (Fig. 16). Um diese Lage des Spannelementes in Bezug auf den Schneideinsatz 8 zu erreichen, liegt die Längsachse 28 des Spannelementes 22 unter einem spitzen Winkel β zur Längsmittelebene 29 des Schneideinsatzes 8, in Draufsicht auf den Schneideinsatz 8 gesehen (Fig. 16). In Seitenansicht schließt die Längsachse 28 des Spannelementes 22 mit dem Boden 17 des Schneideinsatzes 8 einen stumpfen Winkel γ ein (Fig. 15).

Nach dem Einsetzen des jeweiligen Schneideinsatzes 8 werden die Spannelemente 22 in die Gewindebohrungen 24 geschraubt. Sobald der Spannkopf 25 mit der Seitenwand 19 des Klemmteils 14 in Berührung kommt, wird beim weiteren Einschrauben des Spannelements 22 der Schneideinsatz 8 sowohl gegen den Boden 11 als auch gegen die dem Spannelement 22 gegenüberliegende Seitenwand 13 der Aufnahme 7 gedrückt. Auf diese Weise werden die Schneideinsätze 8 sowohl in radialer als auch in axialer Richtung optimal positioniert und ausgerichtet.

Damit der Spannkopf 25 mit der Seitenwand 19 des Klemmteils 14 des Schneideinsatzes 8 in Berührung kommen kann, ist die Seitenwand 13 der Aufnahme 7 mit einer Aussparung 85 (Fig. 2 und 3) versehen.

Die Schneideinsätze 8 bestehen vorteilhaft aus Hartmetall, können aber auch aus anderen hochharten Schneidstoffen bestehen, die auch mit einer Beschichtung versehen sein können. Die Schneideinsätze 8 können darüber hinaus aus mehreren Werkstoffen bestehen. So können beispielsweise die Gewindefräszähne 16 (Fig. 15) aus PKD oder aus CBN bestehen, die in den übrigen, beispielsweise aus Hartmetall bestehenden Teil des Schneideinsatzes 8 eingelötet werden. Auch können Platten aus Cermet oder Keramik eingesetzt werden.

Der Schneideinsatz 8 hat wenigstens eine Schneidkante 30 (Fig. 4). Aus Gründen der Wirtschaftlichkeit und der Ressourceneinsparung ist der Schneideinsatz 8 vorteilhaft mit zwei Schneidkanten versehen.

Da der Schneideinsatz 8 in der beschriebenen Weise mittels des Spannelementes 22 in der Aufnahme 7 verspannt wird, ist eine Bohrung im Schneideinsatz 8 nicht erforderlich, wodurch die Herstellung des Schneideinsatzes vereinfacht wird.

Der Schneideinsatz 8 ist symmetrisch zu seiner Längsmittelebene 29 ausgebildet. Darum kann er nach Verschleiß der einen Schneidkante um 180° gedreht in der Aufnahme 7 eingespannt werden.

Üblicherweise reicht ein Spannelement 22 zum Verspannen des Schneideinsatzes 8 in der Aufnahme 7 aus. Mit ihm wird der Schneideinsatz 8 fest gegen die Anlageflächen 11, 13 der Aufnahme 7 gedrückt. Dadurch ergibt sich ein guter Rundlauf an den Schneiden 30. Die Reibung zwischen dem Spannkopf 25 und der Anlageflächen 11, 13 beim Anziehen des Spannelementes 22 in Verbindung mit der Drehrichtung des Spannelementes 22 unterstützt die exakte axiale Positionierung des Schneideinsatzes 8 in der Aufnahme 7. Bei längeren Schneideinsätzen 8 können auch mehrere Spannelemente 22 entlang dem Schneideinsatz angebracht werden.

Die Schneideinsätze 8 lassen sich problemlos dem Werkzeug entnehmen, indem das Spannelement 22 lediglich zurückgedreht wird. Dann kann der Schneideinsatz 8 problemlos aus der Aufnahme 7 in seiner Längsrichtung herausgezogen werden.

Die Schneideinsätze 8 können geringfügig über die Stirnseite 3 des Grundkörpers 2 vorstehen (Fig. 1 und 2).

Damit die Spannelemente 22 durch ein Werkzeug einfach betätigt werden können, sind in die Stirnseite 3 des Grundkörpers 2 den Spannelementen 22 gegenüberliegend Vertiefungen 31 (Fig. 3) eingearbeitet, die als Anlageflächen für das Werkzeug dienen.

Es ist möglich, die Vertiefung 4 radial geschlossen auszubilden. Da beim Bearbeiten der Werkstücke häufig Kühlschmierstoff eingesetzt wird, der über mindestens einen Kühlkanal in die Vertiefung 4 eingeleitet wird, kann er die bei der Bearbeitung anfallenden Späne optimal abführen. Außerdem kann durch die geschlossene Wandung 5 die beim Bearbeitungsvorgang entstehende Wärme optimal abgeleitet werden. Wird der Fräser unter Minimalmengen-Schmierungs-Bedingungen oder gar zur Trockenbearbeitung eingesetzt, zum Beispiel bei der Graphitbearbeitung, kann der Grundkörper 2 am Umfang auch Öffnungen aufweisen.

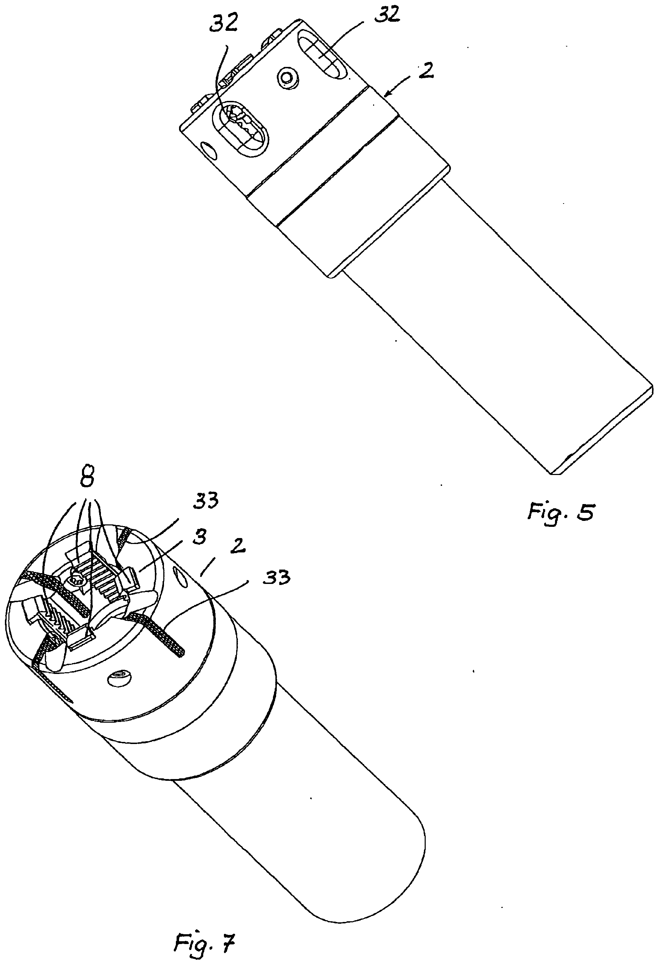

Ein Beispiel hierfür zeigt Fig. 5. Der Grundkörper 2, der entsprechend der vorigen Ausführungsform kreisförmigen Umriss hat, ist mit Öffnungen 32 versehen, die die Wandung 5 der Vertiefung 4 durchbrechen. Die Öffnungen 32 sind über den Umfang des Grundkörpers 2 verteilt angeordnet. Zwischen benachbarten Schneideinsätzen 8 befindet sich vorteilhaft jeweils eine Öffnung 32. Sie kann, wie in Fig. 5 beispielhaft dargestellt, rechteckigen Umriss mit abgerundeten Schmalseiten haben.

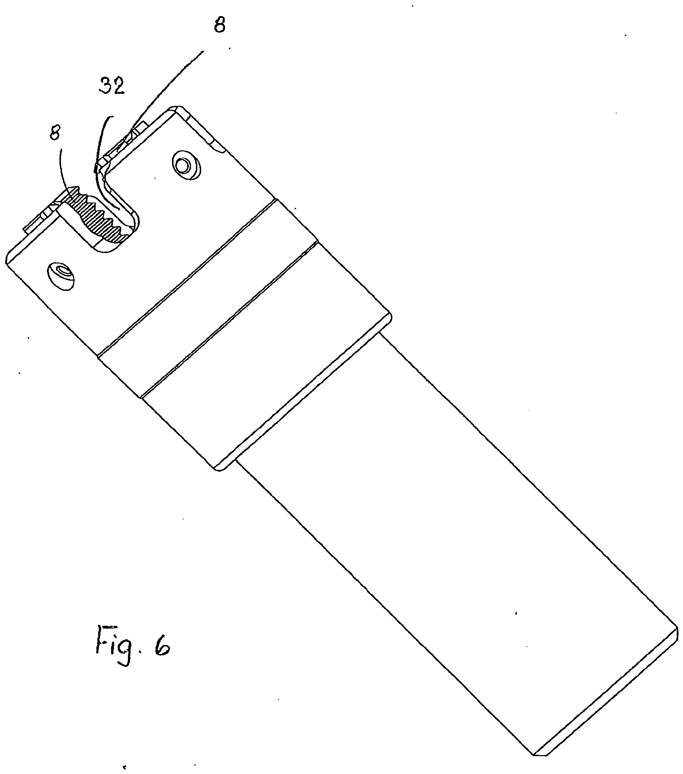

Fig. 6 zeigt ein Ausführungsbeispiel, bei dem die Öffnungen 32 als Schlitze ausgebildet sind, die die Wandung 5 der Vertiefung 4 durchbrechen und zur Stirnseite 3 des Grundkörpers 2 offen sind.

Fig. 7 zeigt einen Fräser, der vorteilhaft dann eingesetzt werden kann, wenn der Bearbeitungsprozess schwingungs- bzw. vibrationsanfällig ist. Der Grundkörper 2 ist hierzu mit Schlitzen 33 versehen, die im dargestellten Ausführungsbeispiel in Winkelabständen von 90° vorgesehen sind. Sie liegen jeweils zwischen benachbarten Schneideinsätzen 8. Die Schlitze sind mit einer schwingungsabsorbierenden Masse ausgefüllt. Die Schlitze 33 können sich von der Stirnseite 3 des Grundkörpers 2 aus bis zum Boden 6 der Vertiefung 4 erstrecken. Die Schlitze 33 sind verhältnismäßig schmal ausgebildet, so dass die Festigkeit des Grundkörpers 2 durch die Schlitze nicht beeinträchtigt wird.

Der Schaft 1 des Fräsers kann ebenfalls unterschiedlich gestaltet sein. Bei den Ausführungsbeispielen nach den Fig. 1 bis 7 ist der Schaft 1 jeweils ein Zylinderschaft, der in eine handelsübliche Werkzeugaufnahme eingesetzt werden kann. Der Schaft 1 kann aus einem anderen Werkstoff bestehen als der Grundkörper 2. So kann der Schaft 1 beispielhaft aus Hartmetall bestehen. Bestehen der Grundkörper 2 und der Schaft 1 aus unterschiedlichen Werkstoffen, dann werden sie mit Hilfe eines gängigen Fügeverfahrens, beispielsweise Schrauben, Löten, Schweißen, Schrumpfen und dergleichen, miteinander verbunden.

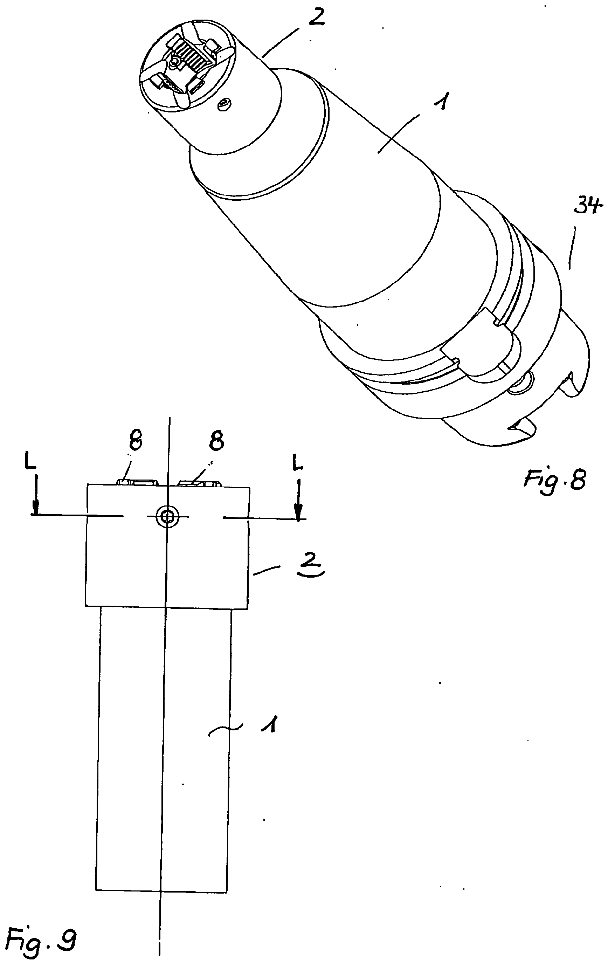

Fig. 8 zeigt einen Fräser, bei dem der Schaft 1 mit einer Schnittstelle versehen ist, so dass dieses Werkzeug direkt in einer Werkzeugmaschine gespannt werden kann. Solche Schnittstellen sind beispielsweise HSK-, SK-, BT, ABS-Schnittstellen und dergleichen. Fig. 8 zeigt einen Fräser mit einer HSK-Schnittstelle 34. Mit einer solchen Schnittstelle ragt das Werkzeug weniger weit aus der Maschinenspindel als Werkzeuge, für die ein zusätzlicher Adapter notwendig ist. Im Übrigen kann der Fräser gleich ausgebildet sein wie bei den vorigen Ausführungsbeispielen.

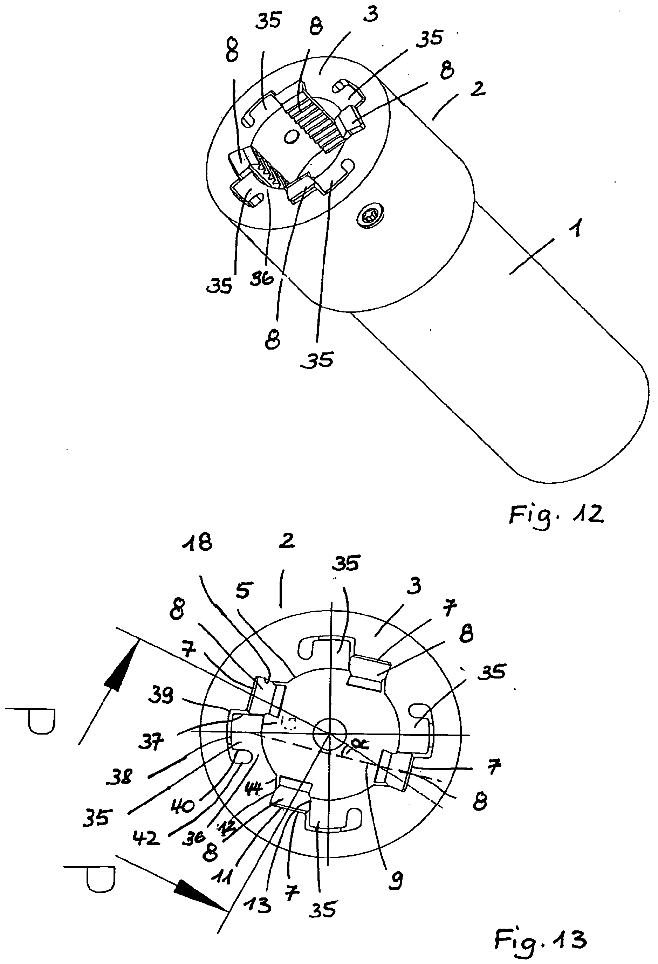

Der Fräser gemäß den Fig. 9 bis 14 ist ebenfalls ein Glockenfräser mit dem Schaft 1 und dem Grundkörper 2, der mit der zentralen Vertiefung 4 versehen ist, die in die Stirnseite 3 des Grundkörpers 2 mündet. Die Vertiefung 4 wird von der Wandung 5 begrenzt (Fig. 13), in der sich die Aufnahmen 7 für die Schneideinsätze 8 befinden. Die Schneideinsätze 8 und die Aufnahmen 7 sind in der Wandung 5 in gleicher Weise angeordnet wie beim Ausführungsbeispiel nach den Fig. 1 bis 4. Die Längsmittelebenen 9 der Aufnahmen 7 liegen dementsprechend unter dem spitzen Winkel α zur zugehörigen Radialen des Grundkörpers 2 (Fig. 13).

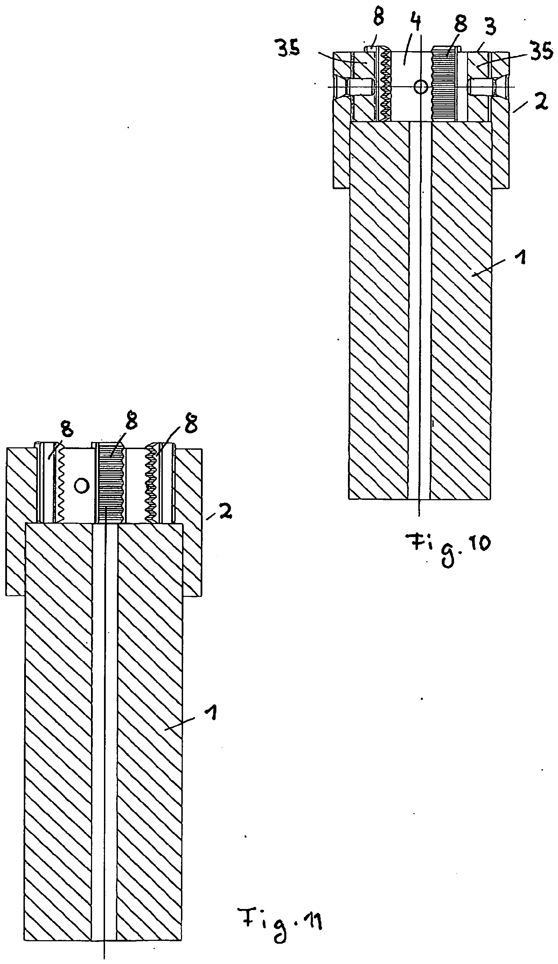

Zum Spannen der Schneideinsätze 8 sind Spannelemente 35 vorgesehen, die im Unterschied zur Ausführungsform nach den Fig. 1 bis 4 keine Spannschrauben, sondern elastisch biegbare Spannzungen sind. Sie sind einstückig mit dem Grundkörper 2 ausgebildet und über einen Biegebereich 36 (Fig. 12) mit dem Grundkörper 2 verbunden. Das Spannelement 35 ist im Querschnitt etwa rechteckförmig ausgebildet und erstreckt sich über den größten Teil der Länge des Schneideinsatzes 8 (Fig. 10).

Die eine Schmalseite 37 des Spannelementes 35 (Fig. 13) bildet die Spannfläche, mit der der Schneideinsatz 8 in der Aufnahme 7 in noch zu beschreibender Weise gespannt wird. Die Spannfläche 37 geht in die eine Längsseite 38 über, die mit Abstand einem radial zurückgesetzten Wandabschnitt 39 gegenüberliegt. Die Längsseite 38 geht in die Schmalseite 40 über, Die Schmalseite 40 geht über einen gekrümmten Wandabschnitt 41 in einen Wandabschnitt 42 über, der etwa parallel zur Schmalseite 40 verläuft und in den Wandschnitt 39 übergeht. Der bogenförmige Wandabschnitt 41 begrenzt den Biegebereich 36. Der Abstand zwischen der Längsseite 38 des Spannelementes 35 und dem Wandabschnitt 39 ist geringer als der Abstand zwischen der Schmalseite 40 und dem in Umfangsrichtung des Grundkörpers 2 gegenüberliegenden Wandabschnitt 42.

Die der Längsseite 38 radial gegenüberliegende Längsseite 43 des Spannelementes 35 bildet einen Teil der Wandung 5 der Vertiefung 4. Die Längsseite 43 ist stetig gekrümmt und geht über eine Abschrägung 44 in die eine Seitenwand 12 der Aufnahme 7 über. An ihr liegt der Schneideinsatz 8 mit seiner Seitenwand 18 an.

Das Spannelement 35 ist mit einer Gewindebohrung 45 versehen, in die eine Spannschraube 46 geschraubt wird. Sie hat einen kegelförmigen Schraubenkopf 47, der in einer kegelförmigen Durchtrittsöffnung 48 des Grundkörpers 2 liegt. Ihr Querschnitt ist so an die Querschnittsform des Schraubenkopfes 48 angepasst, dass er an der Wandung der Durchtrittsöffnung 48 anliegt.

Sobald der Schneideinsatz 8 in die Aufnahme 7 eingesetzt ist, wird die Spannschraube 46 so gedreht, dass das Spannelement 35 etwa radial nach innen bewegt wird. Die Spannfläche 37 des Spannelementes 35 liegt hierbei flächig an der Seitenwand 13 des Schneideinsatzes 8 an. Je weiter das Spannelement 35 durch elastisches Biegen nach außen bewegt wird, umso stärker wird infolge der Anlage der Spannfläche 37 an der Seitenwand 13 der Schneideinsatz 8 gegen die gegenüberliegende Seitenwand 12 sowie den Boden 11 der Aufnahme 7 gespannt.

Soll der Schneideinsatz 8 der Aufnahme 7 entnommen werden, wird die Spannschraube 46 in entgegengesetzter Richtung gedreht, so dass das Spannelement 35 nach innen gebogen wird. Dadurch wird die Verspannung des Schneideinsatzes 8 aufgehoben, so dass er einfach aus der Aufnahme 7 herausgezogen werden kann.

Da sich die Spannfläche 37 über die ganze Länge des Spannelementes 35 erstreckt, liegt die Spannfläche 37 flächig an der Seitenwand 13 des Schneideinsatzes 8 an, der auf diese Weise zuverlässig in der Aufnahme 7 verspannt wird.

Wie sich aus Fig. 14 ergibt, liegt die Längsachse 49 der Spannschraube 46 in einer Radialebene des Grundkörpers 2. Die Längsachse 49 schließt, in Achsrichtung des Grundkörpers 2 gesehen, mit der Längsmittelebene 9 des Schneideinsatzes 8 den spitzen Winkel α ein. Je nach Lage der Spannschraube 46 kann der Winkel α unterschiedlich groß sein, auch ein stumpfer Winkel sein.

Um den Schneideinsatz 8 der Aufnahme 7 entnehmen zu können, wird die Spannschraube 46 in entgegengesetzter Richtung gedreht, wodurch das Spannelement 35 nach innen gebogen wird. Dadurch wird die Verspannung des Schneideinsatzes 8 in der Aufnahme 7 aufgehoben, so dass er einfach herausgezogen werden kann.

Auf die beschriebene Weise werden sämtliche Schneideinsätze 8 in den Aufnahmen 7 des Grundkörpers 2 verspannt. Im Unterschied zu den vorigen Ausführungsbeispielen erfolgt die Klemmung der Schneideinsätze 8 in den Aufnahmen 7 durch eine Keilklemmung. Die biegbaren Spannelemente 36 lassen sich mit den Spannschrauben 46 einfach biegen. Die Spannelemente 35 bilden die Keilelemente, mit denen die Keilklemmung erreicht wird. Die Spannelemente 35 sind infolge des Biegebereiches 36 zuverlässig in der gewünschten Richtung biegbar. Da die Spannelemente 35 einstückig mit dem Grundkörper 2 ausgebildet sind, müssen die Spannelemente nicht gesondert am Werkzeug montiert werden. Es sind lediglich die Schneideinsätze 8 in die Aufnahmen 7 des Grundkörpers 2 einzusetzen. Im Unterschied zu den vorigen Ausführungsbeispielen dienen die Spannschrauben 46 nur zur indirekten Spannung der Schneideinsätze 8 in den Aufnahmen 7.

Die Schneideinsätze 8 können sowohl für die direkte Spannung mittels der Spannschrauben 22 als auch für die indirekte Spannung mittels der Spannschrauben 46 und der Spannelemente 35 herangezogen werden. Für diese unterschiedlichen Fräser sind somit nicht unterschiedliche Schneideinsätze erforderlich.

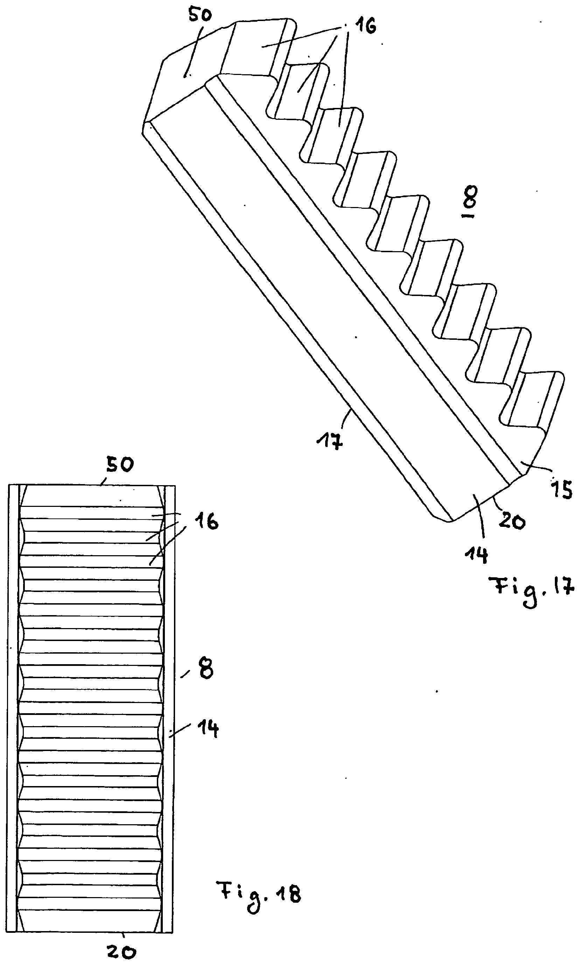

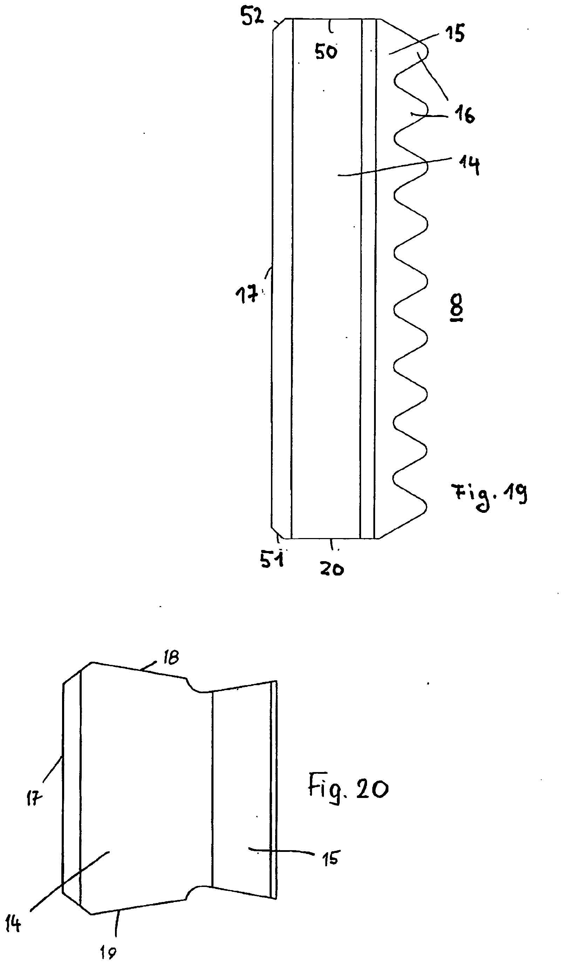

Der Schneideinsatz 8 gemäß den Fig. 15 bis 20 hat rechteckigen Umriss (Fig. 18). Die Gewindefräszähne 16 haben in der Regel gleiche Zahnhöhe. Zum Beispiel bei Schneideinsätzen für konische Gewinde oder bei Schneideinsätzen mit integrierter Entgratschneide kann auch eine andere Gestaltung der Gewindefräszähne vorgesehen sein. Die Zahnbreite ist kleiner als die maximale Breite des Klemmteils 14. Der Boden 17 sowie die Unterseite 20 des Schneideinsatzes 8 sind eben. Auch die obere Stirnseite 50 des Schneideinsatzes 8 ist eben. Die Unter- und die Oberseite 20, 50 schließen jeweils über eine Fase 51, 52 an den ebenen Boden 17. Die Unterseite 20 und die Oberseite 50 haben jeweils im Wesentlichen rechteckigen Umriss.

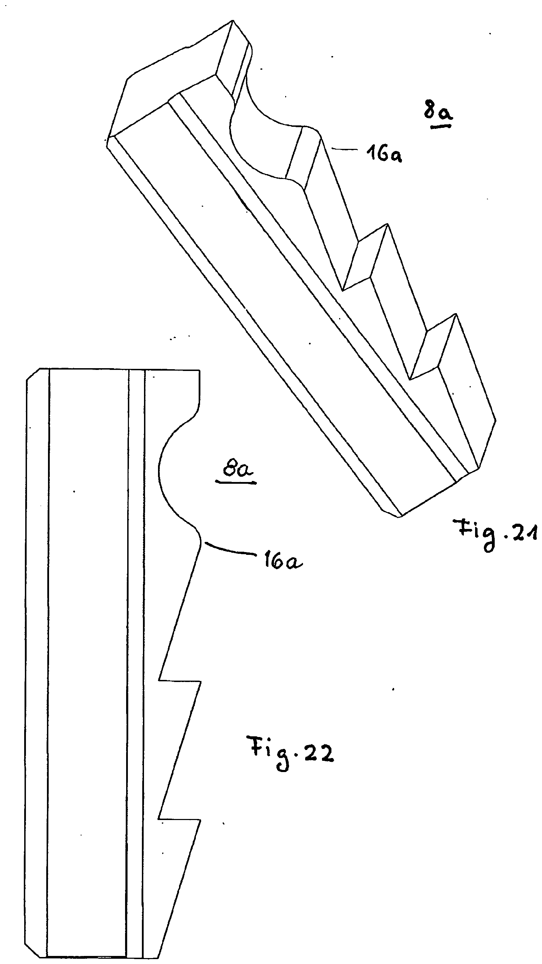

Die Fig. 21 und 22 zeigen einen Schneideinsatz 8a, dessen Schneidzähne 16a anders gestaltet sind als beim Schneideinsatz 8. Im Übrigen ist der Schneideinsatz 8a gleich ausgebildet wie die vorige Ausführungsform.

Zumindest in der einen Seitenwand 18, 19 des Schneideinsatzes 8. 8' kann wenigstens eine Vertiefung oder wenigstens ein Absatz vorgesehen sein. Das Spannelement 22 greift in diesem Fall in die Vertiefung ein oder greift am Absatz an. Auf diese Weise wird der Schneideinsatz 8, 8' zusätzlich formschlüssig gesichert.

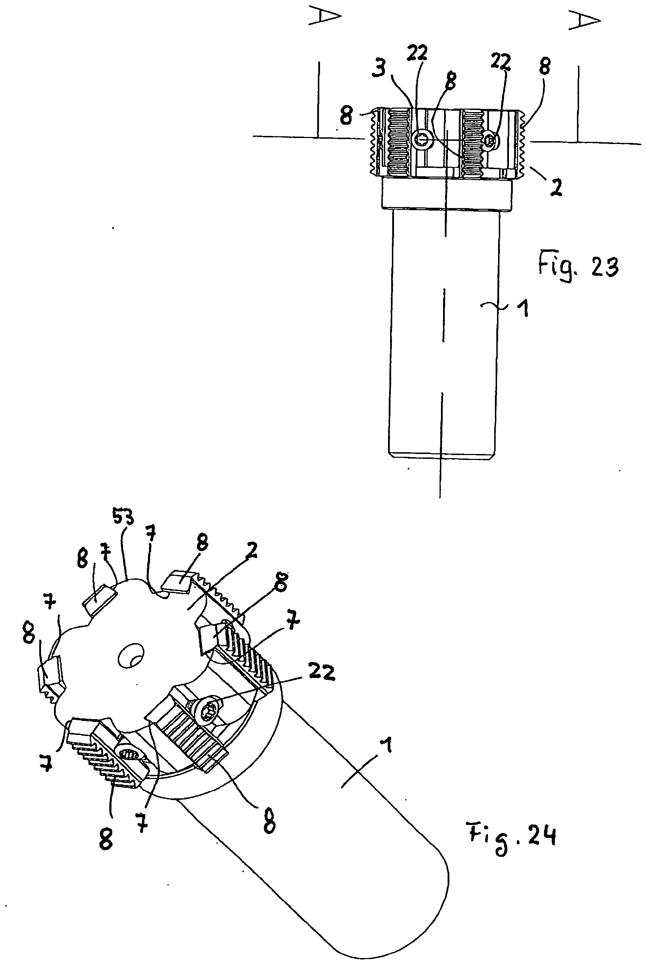

Die Fig. 23 bis 26 zeigen einen Innengewindefräser mit dem Schaft 1 und dem Grundkörper 2. Der Schaft 1 kann als Zylinderschaft ausgebildet sein. Der Fräser kann aber auch entsprechend den vorhergehenden Ausführungsformen mit einer entsprechenden Schnittstelle, beispielsweise einer HSK-Schnittstelle, versehen sein. Der Grundkörper 2 ist im Unterschied zu den vorigen Ausführungsformen massiv ausgebildet und weist die Aufnahmen 7 an seiner äußeren Mantelfäche 53 für die Schneideinsätze 8 auf. Sie sind gleich ausgebildet wie bei den vorigen Ausführungsformen und haben den Zahnteil 15 mit den Gewindeschneidzähnen 16 und den Klemmteil 14.

Die Aufnahmen 7 haben jeweils eine Seitenwand 12, gegen welche der Schneideinsatz 8 mit seiner Seitenwand 18 gedrückt wird. Als Spannelement dient die Spannschraube 22, deren Spannkopf 25 kegelförmig ausgebildet ist. Der Spannkopf 22 ist in der beschriebenen Weise relativ zum Schneideinsatz 8 so angeordnet, dass der Spannkopf 25 mit Linienberührung an der Seitenwand 19 des Schneideinsatzes 8 anliegt. Die Spannschrauben 22 sind in Gewindebohrungen 24 geschraubt, die in der Außenseite des Grundkörpers 2 vorgesehen sind.

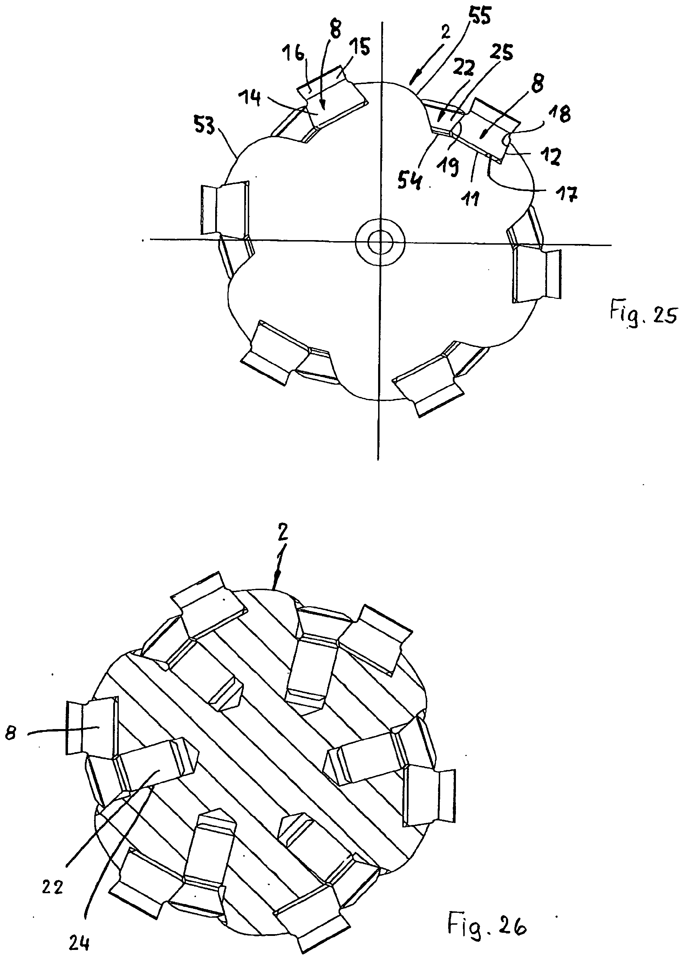

Die Seitenwand 12 der Aufnahme 7 schließt spitzwinklig an den Boden 11 an, an dem die Schneideinsätze 8 mit ihrem Boden 17 in der Einbaulage anliegen. Der Boden 17 geht stumpfwinklig in einen in Umfangsrichtung des Grundkörpers 2 kurzen Bodenabschnitt 54 über, in dem die Gewindebohrung 24 für die Spannschraube 22 vorgesehen ist. Der Bodenabschnitt 54 geht in einen, in Achsrichtung gemäß Fig. 25 gesehen, gekrümmten Wandabschnitt 55 über, der die Mantelfläche 53 des Grundkörpers 2 mit dem Bodenabschnitt 54 verbindet. Der gekrümmte Wandabschnitt 55 erstreckt sich so weit nach außen, dass der Spannkopf 25 der Spannschraube 22 nicht nach außen über die Mantelfläche 53 des Grundkörpers 2 vorsteht. Dadurch ist sichergestellt, dass die Spannköpfe 25 der Spannschrauben 22 beim Bearbeiten nicht mit dem Werkstück in Berührung kommen.

Die Schneideinsätze 8 sind so angeordnet, dass die Fräszähne 16 ausreichend weit über den Grundkörper 2 vorstehen.

Das Werkzeug nach den Fig. 23 bis 26 ist im Übrigen gleich ausgebildet wie die vorigen Ausführungsbeispiele. Die Schneideinsätze 8 werden mit Hilfe der Spannschrauben 22 in den Aufnahmen 7 in der beschriebenen Weise verspannt und sicher gehalten. Die Schneideinsätze 8 stehen nicht über die Stirnseite 3 des Grundkörpers 2 vor (Fig. 23). Sie können aber auch leicht überstehen. Sind die Schneideinsätze zum Beispiel mit zusätzlicher Stirnschneidefunktion ausgestattet, müssen sie über die Stirnseite 3 vorstehen. Der Spannkopf 25 der Spannelemente 22 kann auch ballig ausgeführt sein. Dann können Toleranzen und Verformungen ausgeglichen werden.

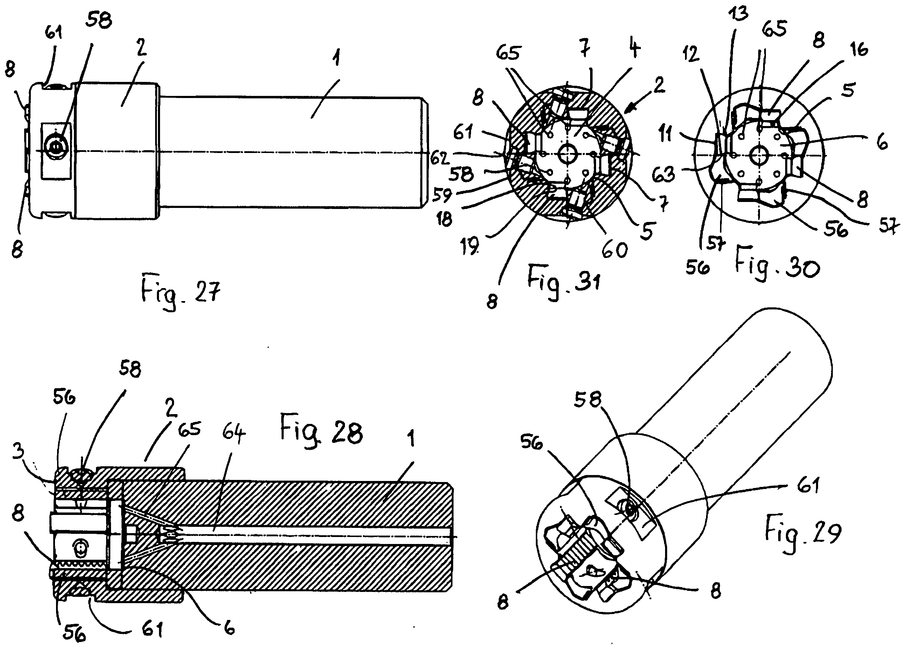

Die Fig. 27 bis 31 zeigen einen Glockenfräser mit dem Schaft 1 und dem Grundkörper 2. Der Grundkörper 2 hat die Vertiefung 4, deren Wandung 5 die Aufnahmen 7 für die Schneideinsätze 8 aufweist. Die Aufnahmen 7 haben die Seitenwand 12 (Fig. 31), gegen die die Schneideinsätze 8 mit ihrer Seitenwand 18 gedrückt werden. Zum Verspannen der Schneideinsätze 8 dienen Spannelemente 56, die einstückig mit dem Grundkörper 2 ausgebildet sind. Die Spannelemente 56 werden zum Beispiel durch Drahterodierschnitte oder durch andere geeignete Verfahren aus dem Grundkörper 2 herausgebildet und sind über die verbleibenden schmalen Biegestege 57 mit dem Grundkörper 2 elastisch federnd verbunden. Die Biegestege 57 sind, wie Fig. 30 zeigt, an der dem Schneideinsatz 8 gegenüberliegenden Seite des Spannelementes 56 vorgesehen.

Die Biegestege 57 liegen im Ausführungsbeispiel parallel zur jeweiligen Radialen des Grundkörpers 2. Sie können aber auch eine andere Lage im Grundkörper 2 haben. Aufgrund der Drahterodierschnitte hat das Spannelement 56 einen ausreichenden Abstand vom übrigen Teil des Grundkörpers 2. Dieser Abstand ist so groß, dass sich das Spannelement 56 beim Spannvorgang ausreichend bewegen kann.

Zur Betätigung der Spannelemente 56 dienen Schrauben 58, die durch Bohrungen 59 im Grundkörper 2 ragen. Die Spannelemente 56 haben Gewindebohrungen 60, in die die Schrauben 58 geschraubt sind. Im Bereich der Bohrungen 59 ist der Grundkörper 2 an seiner Außenseite jeweils mit einer Vertiefung 61 versehen, in der der Schraubenkopf vertieft liegt. Die Schraubenachse 62 liegt, in Achsrichtung des Grundkörpers 2 gesehen (Fig. 31), unter einem spitzen Winkel zur Radialen des Grundkörpers 2. Wie sich aus Fig. 28 ergibt, liegen die Schrauben 58 im Übrigen in einer Radialebene.

Die dem Biegesteg 57 gegenüberliegende Seitenwand 63 (Fig. 30) des Spannelementes 56 bildet eine Klemmfläche, mit der das Spannelement 56 an der Seitenwand 19 des Schneideinsatzes 8 in der Spannstellung anliegt.

Das Spannelement 56 ist zunächst mit der Schraube 58 so weit nach innen gebogen, dass sich der Schneideinsatz 7 von der Stirnseite 3 des Grundkörpers 2 aus in die Aufnahme 7 schieben lässt. Anschießend wird mit der Schraube 58 das Spannelement 56 nach außen gebogen, wobei die Seitenwand 63 des Spannelementes 56 zur Anlage an die Seitenwand 12 des Schneideinsatzes 8 kommt. Der Schneideinsatz 8 wird somit entsprechend den vorherigen Ausführungsformen gegen die Seitenwand 13 und den Boden 11 der Aufnahme 7 gedrückt. Die Seitenwand 13 sowie die Seitenwand 63 des Spannelementes 56 konvergieren in Richtung auf das Innere der Vertiefung 4. Dadurch wird wie bei den vorigen Ausführungsbeispielen der Vorteil erreicht, dass der Schneideinsatz 8 nach dem Einsetzen in die Aufnahme 7 nicht herausfallen kann, auch wenn der Schneideinsatz noch nicht gespannt ist.

Der Schaft 1 ist mit einer zentralen axialen Kühlmittelbohrung 64 versehen (Fig. 28), von der im Bereich des Grundkörpers 2 im Querschnitt kleinere Kühlmittelbohrungen 65 abzweigen, die in den Boden 6 der Vertiefung 4 münden. Die Kühlmittelbohrungen 65 münden mit geringem Abstand von der Wandung 5 der Vertiefung 4 gleichmäßig verteilt in den Boden 6 der Vertiefung 4 (Fig. 30 und 31). Das über die Bohrungen 64, 65 zugeführte Kühlmedium gelangt optimal an die Fräszähne 16 der Schneideinsätze 8.

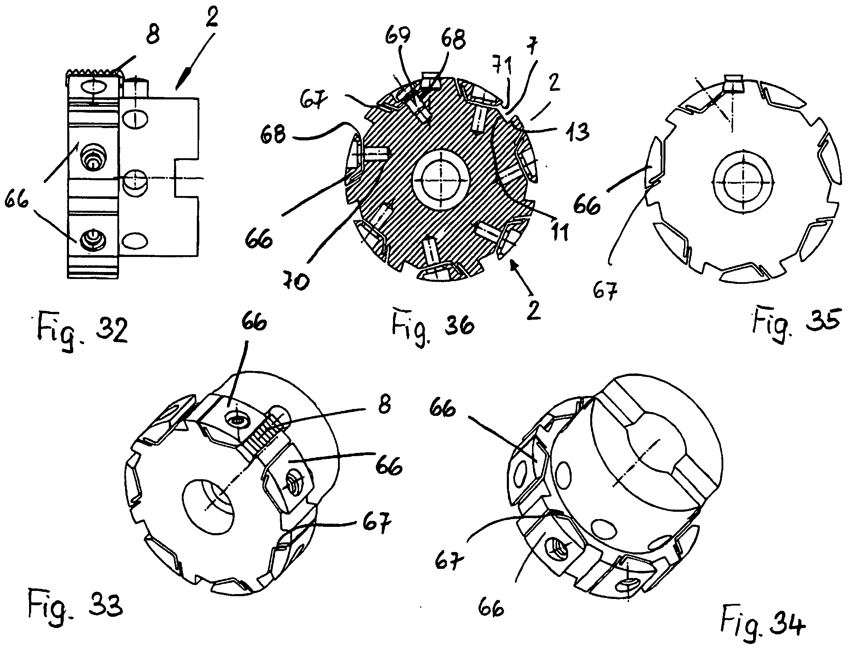

Die Fig. 32 bis 36 zeigen einen Schaftgewindefräser, bei dem die Schneideinsätze 8 ebenfalls über Spannelemente 66 gespannt werden, die zum Beispiel durch Drahterodieren oder andere geeignete Verfahren teilweise aus dem Grundkörper 2 herausgetrennt sind. Lediglich über einen schmalen Biegesteg 67 sind die Spannelemente 66 mit dem Grundkörper 2 verbunden. Die Biegestege 67 liegen unter einem Winkel zur Radialen des Grundkörpers 2.

Die Spannelemente 66 sind mit einer Durchgangsöffnung 68 versehen, durch die eine Schraube 69 ragt, die in eine Gewindebohrung 70 im Grundkörper 2 geschraubt wird.

Die Spannelemente 66 haben eine Seitenwand 71 (Fig. 36), die der Seitenwand 13 gegenüberliegt und zusammen mit ihr die Aufnahme 7 in Umfangsrichtung des Grundkörpers 2 begrenzt. Die beiden Seitenwände 13, 71 verlaufen radial nach außen konvergierend. Dadurch kann der in die Aufnahme 7 eingesetzte Schneideinsatz 8, auch wenn er nicht gespannt ist, nicht radial nach außen fallen. Zum Spannen des Schneideinsatzes 8 wird die Schraube 69 in die Gewindebohrung 70 geschraubt, wobei das Spannelement 66 nach innen gebogen wird und die Seitenwand 71 in Kontakt mit der Seitenwand 19 des Schneideinsatzes 8 kommt. Er wird gegen die Seitenwand 13 und den Boden 11 der Aufnahme 7 gedrückt.

Damit die Schneideinsätze 8 den Aufnahmen 7 entnommen werden können, muss lediglich die Schraube 69 zurückgedreht werden. Dann kann das Spannelement 66 in seine Freigabestellung gelangen.

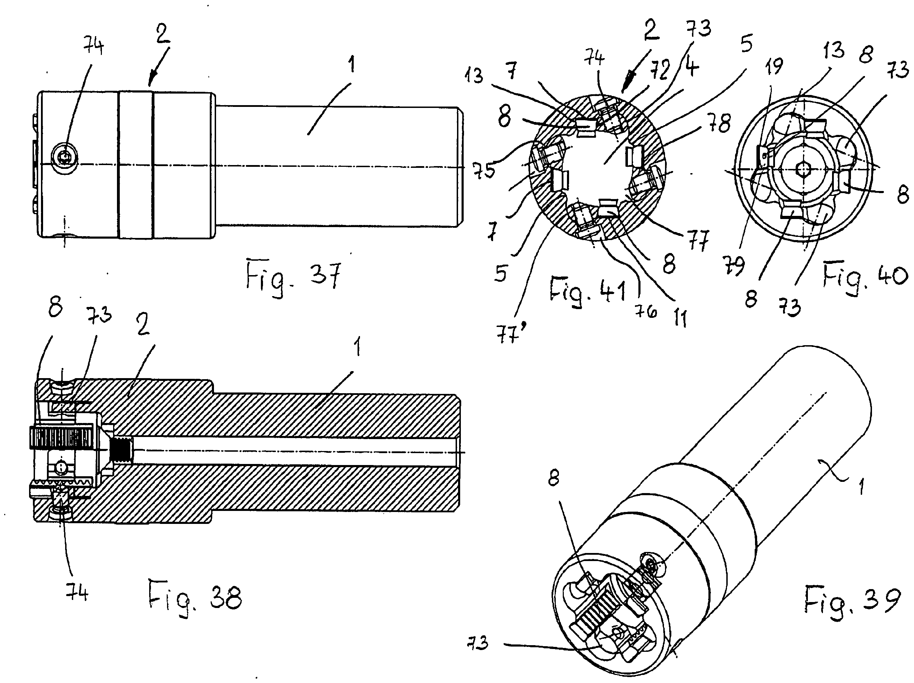

Die Fig. 37 bis 41 zeigen wiederum einen Glockenfräser mit dem Schaft 1 und dem zylindrischen Grundkörper 2. Er hat die zentrale Vertiefung 4, in deren Wandung 5 die Aufnahmen 7 für die Schneideinsätze 8 vorgesehen sind. Die Aufnahmen 7 werden an einer Seite durch die Seitenwand 13 begrenzt, die Teil des Grundkörpers 2 ist. Die gegenüberliegende Seitenwand 72 wird durch eine Seitenwand eines vom Grundkörper 2 getrennten Spannelementes 73 gebildet, das mit Hilfe einer Spannschraube 74 betätigt wird. Sie ragt durch eine Durchtrittsöffnung 75 im Grundkörper 2. Die Durchtrittsöffnung 75 befindet sich in einer an der Außenseite des Grundkörpers 2 vorgesehenen Vertiefung 76, in der der Kopf der Spannschraube 74 vertieft untergebracht ist.

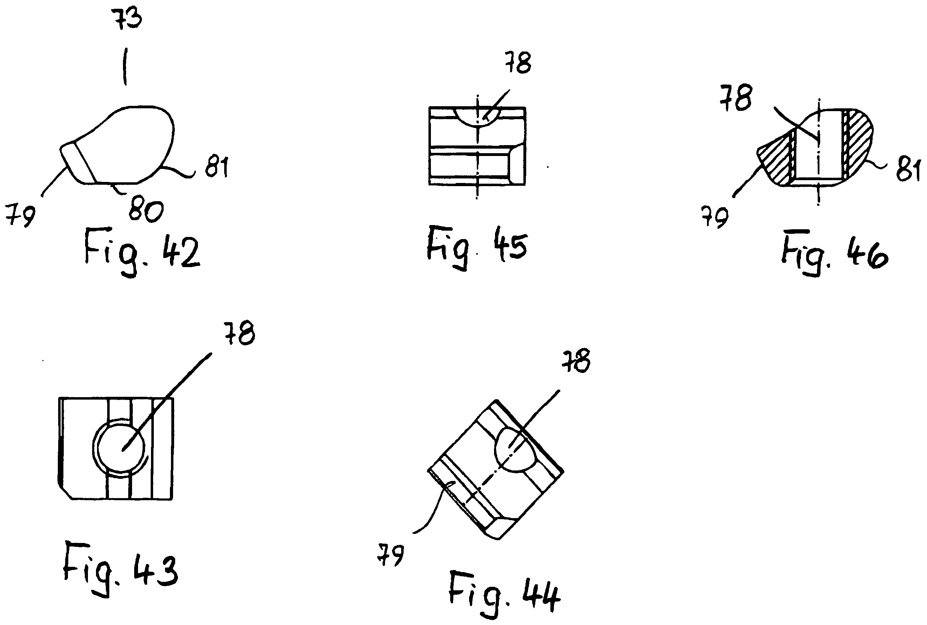

Benachbart zur Seitenwand 13 der Aufnahme 7 ist die Wand 5 der Vertiefung 4 mit einer Vertiefung 77 versehen. Sie hat einen konkav gekrümmt verlaufenden Wandabschnitt 77', der sich bis zum Boden 11 der Aufnahme 7 erstreckt. Dieser konkav gekrümmte Wandabschnitt 77' dient als Anlagefläche für das Spannelement 73. Es hat eine Gewindebohrung 78 (Fig. 41 und 46), in welche die Spannschraube 74 geschraubt wird. Das Spannelement 73 hat eine Seitenwand 79 (Fig. 46), die in der Einbaulage des Spannelementes 73 die Aufnahme 7 begrenzt. Die Seitenwand 79 sowie die Seitenwand 13 der Aufnahme 7 konvergieren in Richtung auf die Vertiefung 4 des Grundkörpers 2. Dadurch wird wie bei den vorigen Ausführungsformen erreicht, dass der Schneideinsatz 8, solange er noch nicht gespannt ist, nicht aus der Aufnahme 7 nach außen in die Vertiefung 4 fallen kann. Mit der Seitenwand 79 liegt das Spannelement 73 an der Seitenwand 19 des Schneideinsatzes 8 an (Fig. 40). Das Spannelement 73 erstreckt sich nur über einen Teil der Länge des Schneideinsatzes 8.

Die Seitenwand 79 schließt stumpfwinklig an eine Schrägfläche 80 an, die in eine gekrümmte Seitenfläche 81 übergeht. Sie liegt in der Einbaulage des Spannelementes 73 am gekrümmten Wandabschnitt 77' der Vertiefung 76 flächig an. Die gekrümmten Flächen 77', 81 ermöglichen eine einfache Ausrichtung des Spannelementes 73 in der Einbaulage.

Die Schneideinsätze 8 sind so in der Wandung 5 der Vertiefung 4 angeordnet, dass die Längsmittelebene der Schneideinsätze 8 etwa parallel zur jeweiligen Radialebene des Grundkörpers 2 liegen.

Die Spannelemente 73 lassen sich über die Spannschrauben 74 von der Außenseite des Grundkörpers 2 aus einfach betätigen. Die Spannschrauben 74 liegen, ähnlich wie bei den vorigen Ausführungsformen, mit ihrer Längsachse spitzwinklig zur jeweiligen Radialebene des Grundkörpers 2.

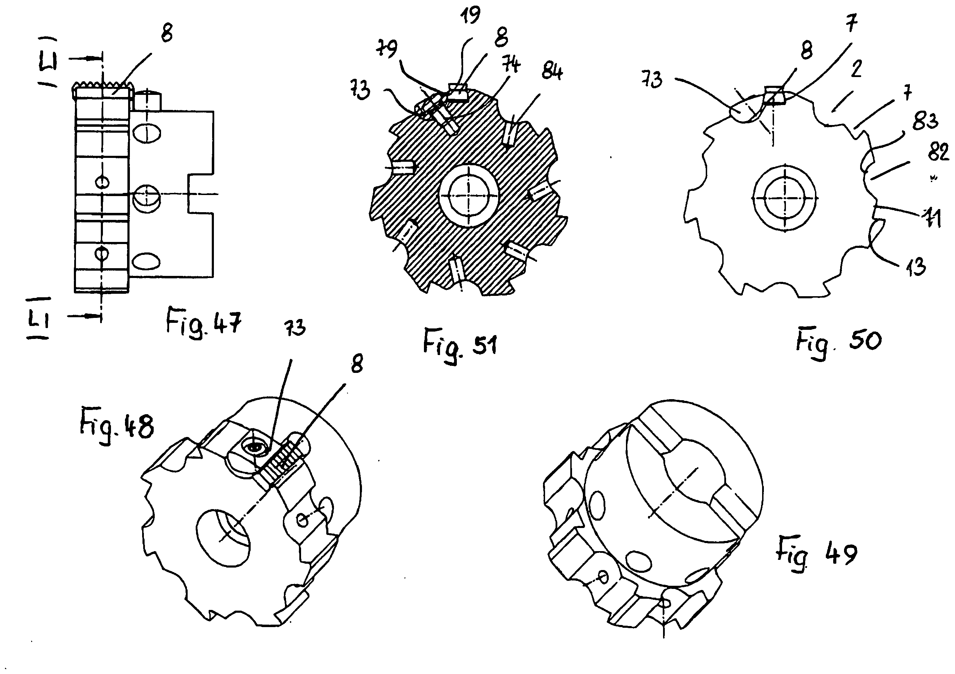

Die Fig. 47 bis 51 zeigen die Möglichkeit, mit den Spannelementen 73 Schneideinsätze 8 einzuspannen, die sich an der Außenseite des Grundkörpers 2 befinden. Die Schneideinsätze sind in den Aufnahmen 7 untergebracht, die über den Umfang des Grundkörpers 2 verteilt angeordnet sind. Die Aufnahmen 7 haben den ebenen Boden 11, an den spitzwinklig die ebene Seitenwand 13 anschließt (Fig. 50). An die Aufnahme 7 schließt eine Vertiefung 82 an, in der das Spannelement 73 untergebracht wird. Die Vertiefung 82 hat einen im Radialschnitt etwa teilkreisförmigen Boden 83, an dem das Spannelement 73 mit seiner gekrümmten Seitenfläche 81 teilweise anliegt. Mit der Seitenwand 79 liegt das Spannelement 73 an der Seitenwand 19 des Schneideinsatzes 8 flächig an. In den Boden 83 der Vertiefung 82 mündet eine Gewindebohrung 84, in die die das Spannelement 73 durchsetzende Spannschraube 74 geschraubt wird.

Mit den Spannelementen 73 werden die Schneideinsätze 8 in der gleichen Weise in den Aufnahmen 7 gespannt, wie anhand der Ausführungsform gemäß den Fig. 37 bis 41 erläutert worden ist.

## Patentansprüche

1. Fräswerkzeug, insbesondere Gewindefräswerkzeug, mit Schneideinsätzen (8, 8'), mit einem Schaft (1) und einem Arbeitsteil (2), der Aufnahmen (7) für Schneideinsätze (8, 8') aufweist, die in den Aufnahmen (7) mit Befestigungselementen (22, 35, 56, 66, 73) befestigbar sind, wobei das Befestigungselement ein Spannelement (22, 35, 56, 66, 73) ist und der Schneideinsatz (8, 8') mit wenigstens einer Schrägfläche (18) gegen eine Schrägfläche (12) der Aufnahme (7) durch das Spannelement (22, 35, 56, 66, 73) verspannbar ist, das an einer seiner Schrägfläche (37, 63, 71) gegenüberliegenden schrägen Spannfläche (19) des Schneideinsatzes (8, 8') angreift, wobei die Schrägfläche (18) und die schräge Spannfläche (19) des Schneideinsatzes (8, 8') einander gegenüberliegende Seitenwände eines Klemmteiles (14) des Schneideinsatzes (8, 8') sind, die in Bezug auf den Arbeitsteil (2) nach innen bzw. nach außen in Richtung auf die Fräszähne (16) des Schneideinsatzes (8, 8') konvergierend verlaufen, wobei die Schrägfläche (12) der Aufnahme (7) unter einem spitzen Winkel an einen Boden (11) der Aufnahme (7) anschließt, die zur Stirnseite (3) des Arbeitsteiles (2) offen ist, und wobei das Spannelement (22, 35, 56, 66, 73) in Umfangsrichtung des Arbeitsteiles (2) neben dem Schneideinsatz (8, 8') liegt,
**dadurch gekennzeichnet, dass** die Aufnahmen (7) so in der Wandung (5) angeordnet sind, dass die Längsmittelebenen (9) der Aufnahmen (7) einen spitzen Winkel (α) mit der jeweiligen Radialen (10) des Arbeitsteils (2) einschließen, und dass das Spannelement (22, 35, 56, 66) durch wenigstens eine Schraube (22, 46, 58, 69, 74) verstellbar ist, deren Längsachse im Wesentlichen in einer Radialebene des Arbeitsteils (2) liegt.

2. Fräswerkzeug nach Anspruch 1,
**dadurch gekennzeichnet, dass** das Spannelement (22) linienförmig an der Spannfläche (19) des Schneideinsatzes (8) anliegt und vorteilhaft eine Spannschraube mit einem konischen Spannkopf (25) ist, der unter Linienberührung an der Spannfläche (19) des Schneideinsatzes (8, 8') anliegt.

3. Fräswerkzeug nach Anspruch 1,
**dadurch gekennzeichnet, dass** der Schneideinsatz (8, 8') im Spannbereich mindestens eine Vertiefung und/oder einen angeformten Absatz aufweist und dass vorteilhaft das Spannelement in die mindestens eine Vertiefung und/oder am Absatz des Schneideinsatzes eingreift bzw. angreift und diesen formschlüssig positioniert.

4. Fräswerkzeug nach Anspruch 1,
**dadurch gekennzeichnet, dass** das Spannelement (35, 56, 66, 73) flächig an der Spannfläche (19) des Schneideinsatzes (8, 8') anliegt.

5. Fräswerkzeug nach Anspruch 4,
**dadurch gekennzeichnet, dass** das Spannelement (35, 56, 66) über wenigstens einen Biegeabschnitt (36, 57, 67) mit dem Arbeitsteil (2) verbunden ist.

6. Fräswerkzeug nach Anspruch 5,
**dadurch gekennzeichnet, dass** der Biegeabschnitt (36, 57, 67) einstückig mit dem Arbeitsteil (2) ausgebildet ist.

7. Fräswerkzeug nach Anspruch 5 oder 6,
**dadurch gekennzeichnet, dass** der Biegeabschnitt (57, 67) durch Drahterodierschnitte oder vergleichbare Verfahren im Arbeitsteil (2) gebildet ist.

8. Fräswerkzeug nach Anspruch 4,
**dadurch gekennzeichnet, dass** das vorteilhaft in einer Aufnahme (77) in der Wandung (5) des Arbeitsteiles (2) gelagerte Spannelement (73) ein vom Arbeitsteil (2) getrenntes Bauteil ist, das mittels wenigstens einer Schraube (74) betätigbar ist.

9. Fräswerkzeug nach einem der Ansprüche 1 bis 8,
**dadurch gekennzeichnet, dass** die Aufnahmen (7) für die Schneideinsätze (8 , 8') an der Innen- und/oder an der Außenseite der Wandung (5) des Arbeitsteiles (2) vorgesehen sind.

10. Fräswerkzeug nach einem der Ansprüche 1 bis 9,
**dadurch gekennzeichnet, dass** die Schrägfläche (12) der Aufnahme (7) und die Spannfläche (19) des Schneideinsatzes (8, 8'), in Achsrichtung des Fräswerkzeuges gesehen, konvergierend verlaufen.

11. Fräswerkzeug nach einem der Ansprüche 1 bis 10,
**dadurch gekennzeichnet, dass** der Schneideinsatz (8, 8') durch das Spannelement (22, 35, 56, 66, 73) axial und radial in der Aufnahme (7) positionierbar ist.

12. Fräswerkzeug nach einem der Ansprüche 1 bis 11,
**dadurch gekennzeichnet, dass** das Fräswerkzeug ein Glockenfräser oder ein Schaftfräser ist.

13. Fräswerkzeug nach einem der Ansprüche 1 bis 12,
**dadurch gekennzeichnet, dass** der Arbeitsteil (2) mit seine Wandung (5) durchsetzenden Öffnungen (32, 33) versehen ist.

14. Fräswerkzeug nach Anspruch 13,
**dadurch gekennzeichnet, dass** die Öffnungen (32, 33) durch randoffene Schlitze im Arbeitsteil (2) gebildet sind, die vorteilhaft mit schwingungsabsorbierendem Material ausgefüllt sind.

## Claims

1. A milling tool, in particular a thread milling tool, having cutting inserts (8, 8'), having a shaft (1) and a working part (2) which comprises receiving means (7) for cutting inserts (8, 8') which can be fastened in the receiving means (7) using fastening elements (22, 35, 56, 66, 73), wherein the fastening element is a clamping element (22, 35, 56, 66, 73) and the cutting insert (8, 8') can be clamped against an oblique surface (12) of the receiving means (7) with at least one oblique surface (18) by the clamping element (22, 35, 56, 66, 73), said clamping element making contact at an oblique clamping surface (19) of the cutting insert (8, 8') lying opposite its oblique surface (37, 63, 71), wherein the oblique surface (18) and the oblique clamping surface (19) of the cutting insert (8, 8') are mutually opposite side walls of a clamping part (14) of the cutting insert (8, 8') which run in a converging manner in relation to the working part (2) inwardly respectively outwardly in the direction of the cutting teeth (16) of the cutting insert (8, 8'), wherein the oblique surface (12) of the receiving means (7) is attached at an acute angle to a base (11) of the receiving means (7) which is open to the end face (3) of the working part (2) and wherein the clamping element (22, 35, 56, 66, 73) lies in the circumferential direction of the working part (2) alongside the cutting insert (8, 8'),
**characterized in that** the receiving means (7) are arranged in the wall (5) in such a manner that the longitudinal median planes (9) of the receiving means (7) form an acute angle (α) with the respective radial (10) of the working part (2) and that the clamping element (22, 35, 56, 66) can be adjusted by at least one screw (22, 46, 58, 69, 74), the longitudinal axis thereof lies substantially in a radial plane of the working part (2).

2. The milling tool according to claim 1,
**characterized in that** the clamping element (22) is in linear contact with the clamping surface (19) of the cutting insert (8) and is advantageously a clamping screw with a conical clamping head (25) which is in linear contact with the clamping surface (19) of the cutting insert (8, 8').

3. The milling tool according to claim 1,
**characterized in that** the cutting insert (8, 8') in the clamping region has at least one depression and/or a formed step and that the clamping element advantageously engages with at least one depression and/or is in contact with the step of the cutting insert and positions it in a form-fitting manner.

4. The milling tool according to claim 1,
**characterized in that** the clamping element (35, 56, 66, 73) is in planar contact with the clamping surface (19) of the cutting insert (8, 8').

5. The milling tool according to claim 4,
**characterized in that** the clamping element (35, 56, 66) is connected to the working part (2) via at least one bending portion (36, 57, 67).

6. The milling tool according to claim 5,
**characterized in that** the bending portion (36, 57, 67) is integrally formed with the working part (2).

7. The milling tool according to claim 5 or 6,
**characterized in that** the bending portion (57, 67) is formed by wire EDM cutting or similar methods in the working part (2).

8. The milling tool according to claim 4,
**characterized in that** the clamping element (73) advantageously mounted in a receiving means (77) in the wall (5) of the working part (2) is a separate component from the working part (2) and which can be actuated by means of at least one screw (74).

9. The milling tool according to one of claims 1 to 8,
**characterized in that** the receiving means (7) for the cutting inserts (8, 8') are provided on the inside and/or on the outside of the wall (5) of the working part (2).

10. The milling tool according to one of claims 1 to 9,
**characterized in that** the oblique surface (12) of the receiving means (7) and the clamping surface (19) of the cutting insert (8, 8') run in a converging manner viewed in the axial direction of the milling cutter.

11. The milling tool according to one of claims 1 to 10,
**characterized in that** the cutting insert (8, 8') can be positioned by the clamping element (22, 35, 56, 66, 73) axially and radially in the receiving means (7) .

12. The milling tool according to one of claims 1 to 11,
**characterized in that** the milling tool is a bell-type milling tool or an end mill.

13. The milling tool according to one of claims 1 to 12,
**characterized in that** the working part (2) is provided with openings (32, 33) passing through its wall (5).

14. The milling tool according to claim 13,
**characterized in that** the openings (32, 33) are formed by slots open at the edge in the working part (2) which are advantageously filled with vibration-absorbent material.

## Revendications

1. Outil de fraisage, notamment outil de fraisage à fileter, pourvu de plaquettes de coupe (8, 8'), avec une tige (1) et une partie opérationnelle (2), qui comporte des logements (7) pour des plaquettes de coupe (8, 8') qui sont susceptibles d'être fixées dans les logements (7) à l'aide d'éléments de fixation (22, 35, 56, 66, 73), l'élément de fixation étant un élément de serrage (22, 35, 56, 66, 73) et la plaquette de coupe (8, 8') étant susceptible d'être serrée par au moins une surface inclinée (18) contre une surface inclinée (12) du logement (7) par l'élément de serrage (22, 35, 56, 66, 73), qui s'engage sur une surface de serrage (19) inclinée de la plaquette de coupe (8, 8') opposée à sa surface inclinée (37, 63, 71), la surface inclinée (18) et la surface de serrage (19) inclinée de la plaquette de coupe (8, 8') étant des parois latérales mutuellement opposées d'une pièce de pinçage (14) de la plaquette de coupe (8, 8'), qui en rapport à la partie opérationnelle (2) s'écoulent en convergence vers l'intérieur ou vers l'extérieur dans la direction vers les dents de fraisage (16) de la plaquette de coupe (8, 8'), la surface inclinée (12) du logement (7) se raccordant sous un angle aigu sur un fond inférieur (11) du logement (7), qui est ouverte sur la face frontale (3) de la partie opérationnelle (2), et dans la direction périphérique de la partie opérationnelle (2), l'élément de serrage (22, 35, 56, 66, 73) se situant à côté de la plaquette de coupe (8, 8'), **caractérisé en ce que** les logements (7) sont placés dans la paroi (5) de telle sorte que les plans médians longitudinaux (9) des logements (7) incluent un angle aigu (α) avec la radiale (10) respective de la pièce opérationnelle (2) et **en ce que** l'élément de serrage (22, 35, 56, 66) est réglable par au moins une vis (22, 46, 58, 69, 74) dont l'axe longitudinal se situe sensiblement dans un plan radial de la pièce opérationnelle (2).

2. Outil de fraisage selon la revendication 1, **caractérisé en ce que** l'élément de serrage (22) est adjacent en forme de ligne à la surface de serrage (19) de la plaquette de coupe (8) et est de préférence une vis de serrage pourvue d'une tête de serrage (25) conique, qui est adjacente par contact linéaire à la surface de serrage (19) de la plaquette de coupe (8, 8').

3. Outil de fraisage selon la revendication 1, **caractérisé en ce que** dans la zone de serrage, la plaquette de coupe (8, 8') comporte au moins un creux et/ou un téton surmoulé et **en ce qu'**avantageusement l'élément de serrage s'engage dans ou s'accroche sur l'au moins un creux et/ou sur le téton de la plaquette de coupe et positionne celle-ci par complémentarité de forme.

4. Outil de fraisage selon la revendication 1, **caractérisé en ce que** l'élément de serrage (35, 56, 66, 73) est adjacent de manière plane à la surface de serrage (19) de la plaquette de coupe (8, 8').

5. Outil de fraisage selon la revendication 4, **caractérisé en ce que** l'élément de serrage (35, 56, 66) est relié par l'intermédiaire d'au moins un tronçon flexible (36, 57, 67) avec la partie opérationnelle (2).

6. Outil de fraisage selon la revendication 5, **caractérisé en ce que** le tronçon flexible (36, 57, 67) est conçu en monobloc avec la partie opérationnelle 2).

7. Outil de fraisage selon la revendication 5 ou 6,
**caractérisé en ce que** le tronçon flexible (57, 67) est formé par des coupes d'étincelage par fil ou des procédés comparables dans la partie opérationnelle (2).

8. Outil de fraisage selon la revendication 4,
**caractérisé en ce que** l'élément de serrage (73) logé avantageusement dans un logement (77) dans la paroi (5) de la partie opérationnelle (2) est un élément séparé de la partie opérationnelle (2) qui est susceptible d'être actionné au moyen d'au moins une vis (74).

9. Outil de fraisage selon l'une quelconque des revendications 1 à 8,
**caractérisé en ce que** les logements (7) pour les plaquettes de coupe (8, 8') sont prévus sur la face interne et/ou sur la face externe de la paroi (5) de la partie opérationnelle (2).

10. Outil de fraisage selon l'une quelconque des revendications 1 à 9,
**caractérisé en ce que**, vues dans la direction de l'axe de l'outil de fraisage, la surface inclinée (12) du logement (7) et la surface de serrage (19) de la plaquette de coupe (8, 8') s'écoulent en convergence.

11. Outil de fraisage selon l'une quelconque des revendications 1 à 10,
**caractérisé en ce que** la plaquette de coupe (8, 8') est positionnable par l'élément de serrage (22, 35, 56, 66, 73) en direction axiale et radiale dans le logement (7).

12. Outil de fraisage selon l'une quelconque des revendications 1 à 11,
**caractérisé en ce que** l'outil de fraisage est une fraise cloche ou une fraise à queue.

13. Outil de fraisage selon l'une quelconque des revendications 1 à 12,
**caractérisé en ce que** la partie opérationnelle (2) est munie d'orifices (32, 33) traversant sa paroi (5) .

14. Outil de fraisage selon la revendication 13,
**caractérisé en ce que** les orifices (32, 33) sont formés par des fentes à bords ouverts dans la partie opérationnelle (2) qui sont remplies avantageusement de matière absorbant les vibrations.
